(19) Europäisches Patentamt
European Patent Office
Office Européen des brevets

(11) Publication number: 0 254 697 B1

# (12) EUROPEAN PATENT SPECIFICATION

(45) Date of publication of patent specification: 02.01.91 Bulletin 91/01

(51) Int. Cl.$^5$: B01D 53/34

(21) Application number: 87850179.0

(22) Date of filing: 27.05.87

## (54) Process and apparatus for separating mercury from flue gases and process waste gases.

(30) Priority: 02.06.86 SE 8602495

(43) Date of publication of application: 27.01.88 Bulletin 88/04

(45) Publication of the grant of the patent: 02.01.91 Bulletin 91/01

(84) Designated Contracting States: AT BE CH DE FR GB LI NL

(56) References cited:
EP-A- 0 138 781
FR-A- 2 324 579
US-A- 4 009 241
US-A- 4 443 417

(73) Proprietor: Lindahl, Erik
Appelboms väg 14
S-186 00 Vallentuna (SE)
Proprietor: Hovsenius, Gunnar
Tunavägen 32
S-194 51 Upplands Väsby (SE)

(72) Inventor: Lindahl, Erik
Appelboms väg 14
S-186 00 Vallentuna (SE)
Inventor: Hovsenius, Gunnar
Tunavägen 32
S-194 51 Upplands Väsby (SE)

(74) Representative: Örtenblad, Bertil Tore
Noréns Patentbyra AB Box 27034
S-102 51 Stockholm (SE)

EP 0 254 697 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method for separating mercury from flue gases and process waste gases, and an arrangement of apparatus herefor.

A method of separating mercury from moist flue gases which contain high percentages of hydrogen chloride (HCl) and in which HCl is the predominant acid component, e.g. flue gases generated when burning waste materials, is described in Swedish Published Specification No 440.608. According to this method, oxidized, and therewith water-soluble, mercury is scrubbed from the flue gases with the condensate obtained when cooling the flue gases to below dew point temperature. When practicing the method documented in this prior publication, scrubbing and cooling of the flue gases are carried out in two stages.

When practicing this known method, the temperature of the gas is lowered in a first stage, calculated in the flow direction of the gas, to one or more degrees above the dew point of the flue gas. This is effected by bringing the flue gases and cold washing liquor into direct contact with one another. The major part of the mercury present is extracted at the same time, together with the hydrogen chloride content of the flue gases. The washing solution is therewith momentarily acidified. The gases are then further cooled in the following stage, normally down to a temperature of 35° to 40°C, the water of condensation being recovered and further washing achieved. The water recovered in the second stage is injected or sprayed into the first stage.

During its passage through each of the two stages, the washing liquid is heated from about 25°C to 50°C - 60°C. Heat is recovered from the liquid solution removed in the second stage with the aid of a heat pump, therewith cooling the solution from 50°C - 60°C to 25°C.

When practicing the aforedescribed method, the oxidized mercury dissolves in the washing liquid to form complex and not-readily volatilized compounds such as $HgCl_4^{2-}$. Because of this the mercury is contained in the washing, liquid, which is tapped-off and the mercury and metals dissolved out from separated fly ash are neutralized and precipitated.

Difficulties in extracting mercury occur in those cases where the water content of the mercury-contaminated gases is so low that the condensate formed in the second stage of the aforedescribed process is insufficient to achieve the effect required in the first stage, or where the halide-content of the gases, normally HCl, is so low that insufficient mercury complexes are formed, or where the sulphur-dioxide content of the gases is such that $SO_2$ dominates over hydrogen chloride with regard to acidity, therewith greatly impairing the separation of mercury.

The present invention relates to a method in which these drawbacks are avoided.

The inventive method is particularly suited for processing flue gases which contain such high proportions of sulphur dioxide. $SO_2$. that $SO_2$ dominates over hydrogen chloride, HCl, with regard to acidity.

The present invention thus relates to a method for separating mercury from flue gases and process gases that contain water vapour, including the separation of water-soluble substances from the flue or process gases, wherein the flue or process gases are brought into direct contact with a finely-divided washing liquid in two or more separation stages ; wherein the gases are cooled in a later separation stage, seen in the direction of gas flow, with finely-divided washing liquid to a temperature at which the water vapour in the flue gases condenses ; wherein the resultant washing liquid is collected and cooled and part of said liquid is recycled for use in said second stage and part is fed to an earlier separation stage as seen in the direction of flue-gas flow, in which the washing liquid is finely-divided and caused to meet contaminated flue gases such that the water-soluble and potentially water-soluble constituents of said gases are dissolved in the finely divided water ; and wherein the thus contaminated washing liquid is collected for further treatment, characterized by adding a halide, such as hydrogen chloride (HCl) to a part of the washing liquid collected in the earlier separation stage and introducing said part in a finely-divided state into the earlier separation stage, said halide being added in an amount such as to impart to the washing liquid finely divided in the earlier separation stage a pH-value of about 3 or slightly therebelow which is sufficiently low to prevent sulphur dioxide ($SO_2$) present in the flue gases from dissolving in the washing liquid, and which ensures that there is sufficient halide present to form a complex compound with mercury contained in the flue gases and in separating solids from the washing liquid separated the first separation stage (1) prior to passing a part of said washing liquid to a treatment vessel (32) or the like in which the pH of the washing liquid is brought to a predetermined value.

The invention also relates to apparatus intended for separating mercury from flue gases and process waste-gases and being essentially of the kind disclosed in the preamble of claim 4 and having the characteristic features set forth in the characterizing clause thereof.

The present invention will now be described in more detail with reference to an exemplifying embodiment of apparatus according to the invention illustrated in the accompanying drawing.

The apparatus illustrated in the drawing incorporates a first separation stage 1, as seen in the direction of gas flow, and a later, or second, separation stage 2.

Each of the separation stages 1, 2 incorporate means for spraying or injecting finely-divided washing liquid into a vessel.

Flue gases deriving from combustion processes are introduced through a pipe 3 into the lower part of the first separation stage and passed through said stage, subsequent whereto the gases leave the first separation stage and enter the lower part of the apparatus of the second separation stage through a pipe 4. The gases are then passed through the second stage 2 and are subsequently discharged through a pipe 5 to atmosphere or to a further gas treatment stage (not shown). The apparatus of the first stage 1 includes means in the form of a pipe-system 6 provided with spray nozzles or jets for spraying finely-divided washing liquid under high pressure. The second stage 2 also includes a pipe-system 7 provided with spray nozzles or jets for spraying washing liquid under high pressure.

The later stage 2, seen in the direction of gas flow, includes a flow circuit for recycling in the second stage water separated from the flue gases and for supplying the washing liquid thus obtained to the first stage 1 through a supply pipe 13. The more or less contaminated water is hereinafter referred to as washing liquid.

That part of the apparatus described hitherto, and the function thereof, corresponds in all essentials with the apparatus and apparatus function described in the Swedish Published Specification No 440 608.

Thus, the flue gases are cooled in the second stage to a temperature beneath the dew point of the gases, so that a water condensate is formed. The water deriving from the second stage 2 is taken from the bottom of the vessel 9 of said stage and is lead away through a pipe 8, preferably to a cooling device in the form of a heat pump 10 (VP). Part of the thus cooled water is pumped through a pipe 12 to the pipe-system 7 of the second stage, with the aid of a pump 11, and part is delivered to the pipe-system of the first stage through the aforesaid supply pipe 13. The relationship between the amount of water delivered to the two pipes 12, 13 can be controlled by a control valve 14, 15 incorporated in a respective pipe 12 and 13. Thus, the water obtained in the second stage is recycled. When first starting-up the apparatus, and when the flue gases are found to contain insufficient water, cold water taken, e.g. from the domestic water supply, can be introduced through a pipe 16 (KV).

The water supplied to the first stage 1 through the supply pipe 13 is injected into the pipe-system 6 of the first stage 1. Scrubbing of the waste gases takes place predominantly in this first process stage, even though the gases are also scrubbed, or washed, to some extent in the second process stage. The contaminated water obtained in the first stage is tapped through a pipe 17 located at the bottom of the vessel 18 in the first stage and conducted to a collecting vessel 19 for further processing.

The first of the problems recited above relates to the case when the water recovered in the second stage 2 is insufficient to satisfy the water requirement of the first stage. This problem is solved here, by recycling in the first stage 1 a given quantity of the water recovered in said first stage. Thus, to this end the water is passed through a pipe 20 to a suitable cooling device 21, for example in the form of a heat pump (VP). The water is then de-slimed in a device 22, such as a settling tank. Slime may also be extracted by flotation and filtration.

Part of the thus treated water is passed from the device 22, through a pipe 23, a pump 24, and a pipe 25, to one or more vessels 26 for further treatments, whereafter the water is finally discharged from the system through a pipe 27, while part of said water is passed to a pipe 28 which is connected to the aforesaid supply pipe 13 extending from the second stage 2 to the pipe-system 6 of the first stage 1. The flow of water to the pipe 25 and to the pipe 28 is controlled by respective control valves 29, 30 incorporated in said pipes.

In the simplest case, i.e. during operational periods in which the water in the pipe 28 requires no further treatment, the water is passed to the aforesaid supply pipe 13, and therewith to the pipe-system 6 of the first stage, via a pipe 31, a treatment vessel 32, a pump 33, and a pipe 34.

However, in accordance with the present invention, the water separated from the first stage, i.e. the water conducted in the pipe 28, is treated to adjust its pH, either in the case where the halide content of the water supplied to the pipe-system of the first stage is so low as to be insufficient to form complex mercury compounds, or in the case when the sulphur-dioxide content of the flue gases is such that the sulphur dioxide predominates over the hydrogen chloride (HCl) with regard to acidity, therewith greatly impairing the separation of mercury.

This particularly applies to systems in which sulphur dioxide ($SO_2$) dissolves in the washing liquid to form bisulphite ($HSO_3^-$) or sulphite ($SO_3^{2-}$). Both bisulphite and the sulphite ion are namely sufficiently strong reductants for the reduction of oxidized mercury ($Hg^{2+}$) to elementary mercury ($Hg^0$).

For example, the following reaction takes place in the case of sulphite :

$$SO_3^{2-} + H_2O \rightleftharpoons SO_4^{2-} + 2H^+ + 2e^-$$

$$Hg^{2+} + 2e^- \rightleftharpoons Hg^0$$

with the expression

$$SO_3^{2-} + Hg^{2+} + H_2O \rightleftharpoons Hg^0 + SO_4^{2-} + 2H^+$$

It will be seen from this reaction process that the reduction reaction is inhibited if the hydrogen-ion concentration increases, i.e. if the pH is maintained at a low level.

The extent to which elementary mercury ($Hg^0$) dissolves in water is so low that it can be said that the mercury is quantitatively volatilized and therewith remitted to the waste gases.

Consequently, there is added to the water arriving from the pipe 28, in accordance with the invention, a halide, such as hydrogen chloride (HCl) or some other halide, in a quantity such as to impart to the water entering the pipe-system 6 of the first stage 1 a pH such that sufficient halides are present to form complex compounds with mercury and such that the sulphur dioxide ($SO_2$) present in the flue gases will not dissolve in the washing liquid. A typical pH in this regard is 3 or somewhat lower. When the water entering the pipe-system 6 of the first stage 1 has this pH, the mercury is captured in a halide complex with low vapour pressure, whereas the sulphur dioxide passes through the first stage 1 without dissolving in the washing liquid. Examples of complex mercury compounds of the kind meant here are $HgCl_4^{2-}$ and $HgBr_4^{2-}$.

For the purpose of monitoring the pH of the incoming water, a pH-sensor 35 is incorporated in the supply pipe 13 leading to the pipe-system 6 of the first stage 1. The output signal produced by the sensor is used to adjust the setting of a metering valve 37 located between a tank 38 containing an halide, e.g. HCl, and a pipe 39 leading to the treatment vessel 32. In the illustrated embodiment, the treatment vessel is also connected to the domestic cold-water supply, by a pipe 40. The pH-adjusted water in the treatment vessel 32 is passed, via the pump and the pipe 34, to a mixing location, where it is mixed with the water condensate obtained from the second stage 2. The quantity of water recycled in the first stage may be varied according to the quantity of water that is obtained in the second stage. Consequently, the pipe 34 preferably incorporates a valve, such as valve 42, through which a desired mixing ratio can be obtained between the two water flaws in pipes 34 and 13.

As beforementioned, the solids content of the optionally cooled washing solution is separated therefrom by known processes, such as sedimentation, flotation and filtration. During these periods of operation in which the amount of condensation in the second stage is not sufficient to meet requirements in the first stage, whereas the HCl-availability in relation to the mercury-content of the gases is sufficient to form complex compounds, the de-slimed washing solution can be recycled back to the first stage, with no further cleansing, in an amount sufficient to achieve the requisite contact between gas and liquid, as given above.

The hollow arrows in the drawing denote the direction of gas flow and the other, filled arrows denote the direction of liquid flow.

Thus, by controlling the pH of the washing liquid in this way prior to injecting or spraying the liquid into the first stage, there is obtained an effective separation of mercury, even if the flue gases contain a high proportion of sulphur dioxide.

According to the invention, the contaminated water deriving from the first stage is thus further treated prior to being recycled, in part, in the first stage, this treatment involving regulation of the pH of the water. Naturally, the pH of the water is regulated in accordance with requirements, stipulated by the sulphur-dioxide content of the flue gases. The quantity of sulphur dioxide in the gases is determined with the aid of a suitable known sensor 43, which is located, e.g., in the flue-gas inlet-pipe 3 leading to the first stage.

Electric signals generated by the sensor 43 and the pH-sensor 35 are transmitted over conductors 44, 45 to a control circuit 46, which is constructed to effect commensurate control of the metering valve 37, such as to reach a control pH-value, or set point, in respect of the prevailing sulphur dioxide content.

The control circuit 46 may be of any suitable known kind, and may include a microprocessor programmed with the pH-values desired at varying sulphur-dioxide contents of the flue gases.

Thus, the present invention also solves the problems mentioned in the introduction, and in particular

the problem which is manifested when the flue gases contain excessive proportions of sulphur dioxide by creating conditions under which mercury is separated from the flue gases in the first stage. The liquid tapped from the first stage and containing complex mercury compounds is then treated, inter alia, in the vessel 26, and optionally also in further treatment vessels, in which said liquid is treated chemically in a known manner to separate mercury and other impurities therefrom. The water-soluble sulphide $Na_2S$ can be added to separate mercury.

It should be noted that some mercury will also be extracted in the setting tank, since the sludge or slime formed therein will also contain mercury.

It will be understood that modifications can be carried out to the described and illustrated inventive system. For example, the collecting vessel and the settling tank, or sludge separator, can be replaced with any other suitable vessel and devices intended for corresponding purposes. Furthermore, it is possible in accordance with the invention to use for that part of the washing liquid recycled in the first stage a pipe-system which is separate from the pipe-system to which washing liquid is passed from the second stage 2.

Consequently, the invention shall not be considered to be restricted to the aforedescribed embodiments, since modifications can be made within the scope of the following claims.

## Claims

1. A method for separating mercury from flue gases and process gases that contain water vapour, including the separating water-soluble substances from the flue or process gases, wherein the flue or process gases are brought into direct contact with a finely-divided washing liquid in two or more separation stages ; wherein the gases are cooled in a later separating stage (2), seen in the direction of gas flow, with finely-divided washing liquid to a temperature at which the water vapour in the flue gases condenses : wherein the resultant washing liquid is collected and cooled and part of said liquid is recycled for use in said second stage (2) and part is fed to an earlier separation stage (1) as seen in the direction of flue-gas flow, in which the washing liquid is finely-divided and caused to meet contaminated flue gases such that the water-soluble and potentially water-soluble constituents of said gases are dissolved in the finely divided water; and wherein the thus contaminated washing liquid is collected for further treatment. **characterized by** adding a halide, such as hydrogen chloride (HCl) to a part of the washing liquid collected in the earlier separation stage (1) and introducing said part in a finely-divided state into the earlier separation stage, said halide being added in an amount such as to impart to the washing liquid finely divided in the earlier separation stage (1) a pH-value of about 3 or slightly therebelow which is sufficiently low to prevent sulphur dioxide ($SO_2$) present in the flue gases from dissolving in the washing liquid, and which ensures that there is sufficient halide present to form a complex compound with mercury contained in the flue gases and in separating solids from the washing liquid separated in the first separation stage (1) prior to passing a part of said washing liquid to a treatment vessel (32) or the like in which the pH of the washing liquid is brought to a predetermined value.

2. A method according to claim 1 **characterized by** mixing the pH-adjusted washing liquid with the washing liquid arriving from the second separation stage (2), prior to injecting the washing liquid into the first separation stage.

3. An apparatus for separating mercury from flue gases and process gases that contain water vapour, including the separation of water-soluble substances from the flue or process gases, which apparatus incorprates two or more separation stages each of which comprises a vessel and means for injecting or spraying finely-divided washing liquid into the vessel. and in which a later separating stage (2), as seen in the flow direction of the flue or process gases, incorporates a flow circuit (8, 12, 13) for recycling water-separated from the flue or process gases through a cooler (10) to both the same and an earlier separation stage (1), and in which apparatus the earlier separation stage (1) is connected to a collecting vessel **characterized by** a connection pipe-line (23, 31, 34) which extends between the collecting vessel (19, 22) and said washing-liquid injection means (6) of the earlier separation stage (1), and which pipe-line (23, 31, 34) has connected thereto, via a metering valve (37), a tank (38) which is intended to contain a halide such as HCl, by means of which part of the washing liquid collected in the earlier separation stage (1) can be treated in a manner to adjust the pH thereof, by adding the halide prior to introducing the liquid into the washing-liquid injection means (6) of the earlier separation stage (1).

4. An apparatus according to claim 3 **characterized in** that said collecting vessel (19, 22) incorporates a slime or sludge separator (22), such as a settling tank, to which said connecting pipe-line (23) is connected.

5. An apparatus according to claim 3 or 4, **characterized in** that the connecting pipe-line (23, 31, 34)

discharges into a mixing location (41) along said supply pipe (13) ; and in that a pH-sensor is located downstream of the mixing location, as seen in the direction in which the washing liquid flows.

## Ansprüche

1. Verfahren für Abtrennung von Quecksilber aus Rauchgasen und Prozessgasen, die Wasserdampf enthalten, einschliesslich der Abtrennung von wasserlöslichen Substanzen aus den Rauch- oder Prozessgasen, wo die Rauch- oder Prozessgase in einer oder mehr Trennstufen in direkten Kontakt mit einer feinverteilten Waschflüssigkeit gebracht werden, wo die Gase in einer späteren Trennstufe (2), in Richtung des Gasflusses gesehen, mit feinverteilter Waschflüssigkeit auf eine Temperatur gekühlt werden, bei der der Wasserdampf in den Rauchgasen kondensiert, wo die resultierende Waschflüssigkeit gesammelt und gekühlt und ein Teil genannter Flüssigkeit für Anwendung in genannter zweiter Stufe (2) rückgewonnen und ein Teil zu einer früheren Trennstufe (l), in Richtung des Rauchgasflusses gesehen, geleitet wird, in der die Waschflüssigkeit feinverteilt und veranlasst wird, verunreinigte Rauchgase zu treffen, so dass die wasserlöslichen und möglich wasserlöslichen Bestandteile genannter Gase in dem feinverteilten Wasser gelöst werden und wo die so verunreinigte Waschflüssigkeit für weitere Behandlung gesammelt wird, **dadurch gekennzeichnet,** dass ein Halogenid, wie Chlorwasserstoff (HCl), einem Teil der in der früheren Trennstufe (1) gesammelten Waschflüssigkeit zugesetzt, und gennannter Teil in feinverteiltem Zustand in die frühere Trennstufe eingeführt wird, dass genanntes Halogenid in solcher Menge zugegeben wird, dass der in der früheren Trennstufe (1) feinverteilten Waschflüssigkeit ein pH-Wert von 3 oder etwas darunter vermittelt wird, der genügend niedrig ist, um das Lösen von in den Rauchgasen enthaltenem Schwefeldioxyd ($SO_2$) in der Waschflüssigkeit zu verhüten, und gewährleistet, dass genügend Halogenid vorhanden ist, um eine komplexe Verbindung mit in den Rauchgasen vorhandenem Quecksilber zu bilden, und dass Feststoffe aus der in der ersten Trennstufe (1) abgetrennten Waschflüssigkeit abgetrennt werden, bevor ein Teil genannter Waschflüssigkeit zu einem Behandlungsgefäss (32) o.dgl. geleitet wird, in dem der pH-Wert der Waschflüssigkeit auf einen vorbestimmten Stand gebracht wird

2. Verfahren nach Anspruch 1, **dadurch gekennzeichnet,** dass die Waschflüssigkeit mit justiertem pH-Wert vor ihrem Einspritzen in die erste Trennstufe mit der von der zweiten Trennstufe (2) ankommenden Waschflüssigkeit vermischt wird.

3. Einrichtung für Trennung von Quecksilber aus Rauchgasen und Prozessgasen, die Wasserdampf enthalten, einschliesslich der Abtrennung von wasserlöslichen Substanzen aus den Rauch- oder Prozessgasen, welche Einrichtung zwei oder mehr Trennstufen enthält, von denen jede ein Gefäss und Mittel zum Einspritzen oder Sprühen von feinverteilter Waschflüssigkeit in das Gefäss enthält, und in der eine spätere Trennstufe (2), in Richtung des Flusses der Rauch- oder Prozessgase gesehen, einen Flusskreis (8, 12, 13) für Rückumlauf von Wasser, das von den Rauch- oder Prozessgasen abgetrennt ist, durch einem Kühler (10) zu sowohl derselben als auch einer früheren Trennstufe (1) enthält, und in der die frühere Trennstufe (1) an ein Sammelgefäss angeschlossen ist, **dadurch gekennzeichnet,** dass sich eine Verbindungsrohrleitung (23, 31, 34) zwischen dem Sammelgefäss (19, 22) und genanntem Ein-spritzmittel (6) von Waschflüssigkeit der früheren Trennstufe (1) erstreckt, dass an die Rohrleitung (23, 31, 34) über ein Messventil (37) ein Tank (38) angeschlossen ist, der vorgesehen ist, ein Halogenid, wie HC1, zu enthalten, mit dem ein Teil der in der ersten Trennstufe (1) gesammelten Waschflüssigkeit zur Einstellung des pH-Wertes darin behandelt werden kann, indem das Halogenid vor Einführung der Flüssigkeit in das Waschflüssigkeitseinspritzmittel (6) der früheren Trennstufe (1) zugegeben wird.

4. Einrichtung nach Anspruch 3, **dadurch gekennzeichnet,** dass genanntes Sammelgefäss (19, 22) einen Schlick- oder Schlammtrenner (22), z.B. einen Absetztank,enthält, an den genannte Rohrleitung (23) angeschlossen ist.

5. Einrichtung nach Anspruch 3 oder 4, **dadurch gekennzeichnet,** dass die Verbindungsrohrleitung (23, 31, 34) in eine Mischstelle (41) längs genannter Zuführrohrleitung (13) abgibt, und dass stromabwärts der Mischstelle, in Flussrichtung der Waschflüssigkeit gesehen, ein pH-Fühler sitzt.

## Revendications

1. Procédé pour séparer du mercure de gaz de fumées et de gaz de traitements chimiques qui contiennent de la vapeur d'eau, ce procédé comprenant la séparation de substances solubles dans l'eau des gaz de fumées ou de traitements chimiques, procédé dans lequel les gaz de fumées ou de traitements chimiques sont amenés en contact direct avec un liquide de lavage finement divisé dans deux ou plusieurs étages de

séparation ; dans lequel les gaz sont refroidis dans un étage de séparation ultérieur (2), lorsqu'on regarde dans la direction du débit de gaz, par le liquide de lavage finement divisé, jusqu'à une température à laquelle la vapeur d'eau des gaz de fumées se condense ; dans lequel le liquide de lavage obtenu est récupéré et refroidi de façon qu'une partie de ce liquide soit recyclée pour être utilisée dans le second étage (2) et qu'une partie soit envoyée à un étage de séparation précédent (1) lorsqu'on regarde dans la direction du débit de gaz ; dans lequel le liquide de lavage est finement divisé et amené à rencontrer les gaz de fumées contaminés de façon que les éléments constitutifs solubles dans l'eau et potentiellement solubles dans l'eau de ces gaz soient dissous dans l'eau finement divisée ; et dans lequel le liquide de lavage ainsi contaminé est récupéré pour un traitement ultérieur ; procédé caractérisé en ce qu'il consiste à ajouter un halogénure tel que du chlorure d'hydrogène (HCl) à une partie du liquide de lavage collecté dans l'étage de séparation précédent (1) et à introduire cette partie à l'état finement divisé dans l'étage de séparation précédent, cet halogénure étant ajouté dans une proportion permettent de donner au liquide de lavage finement divisé dans l'étage de séparation précédent (1) une valeur de pH d'environ 3 ou légèrement au-dessous, qui soit suffisamment faible pour empêcher le dioxyde de soufre ($SO_2$) présent dans les gaz de fumées de se dissoudre dans le liquide de lavage, et qui permette de s'assurer de la présence d'une quantité d'halogénure suffisante pour former un composé complexe avec le mercure contenu dans les gaz de fumées ; et à séparer les éléments solides du liquide de lavage séparé dans le premier étage de séparation (1) avant de faire passer une partie de ce liquide de lavage dans un récipient de traitement (32) ou analogue dans lequel le pH du liquide de lavage est amené à une valeur prédéterminée.

2. Procédé selon la revendication 1, caractérisé en ce qu'il consiste à mélanger le liquide de lavage dont on a réglé le pH, avec le liquide de lavage arrivant du second étage de séparation (2), avant d'injecter le liquide de lavage dans le premier étage de séparation.

3. Dispositif pour séparer du mercure de gaz de fumées et de gaz de traitements chimiques qui contiennent de la vapeur d'eau, comprenant la séparation de substances solubles dans l'eau des gaz de fumées ou de traitement chimique, dispositif dans lequel sont incorporés deux ou plusieurs étages de séparation comprenant chacun un récipient et des moyens pour injecter ou pulvériser un liquide de lavage finement divisé dans le récipient ; dans lequel un étage de séparation ultérieur (2), lorsqu'on regarde dans la direction du débit de gaz de fumées ou de traitements chimiques, comprend un circuit de débit (8, 12, 13) pour recycler l'eau séparée des gaz de fumées ou de traitements chimiques, à travers un dispositif de refroidissement (1O), à la fois vers celui-ci et vers un étage de séparation précédent (1) ; et dans lequel l'étage de séparation précédent (1) est relié à un récipient collecteur ; dispositif caractérisé en ce qu'il comprend une conduite de liaison (23, 31, 34) montée entre le récipient collecteur (19, 22) et les moyens d'injection de liquide de lavage (6) de l'étage de séparation précédent (1), et en ce que la conduite (23, 31, 34) est reliée, par l'intermédiaire d'une soupape de mesure (37), à un réservoir (38) destiné à contenir un halogénure tel que HC1 grâce auquel une partie du liquide de lavage collecté dans l'étage de séparation précédent (1) peut être traitée de manière à régler son pH, en ajoutant l'halogénure avant d'introduire le liquide dans les moyens d'injection de liquide de lavage (6) de l'étage de séparation précédent (1).

4. Dispositif selon la revendication 3, caractérisé en ce que le récipient du collecteur (19, 22) comprend un séparateur de boue ou de vase (22), tel qu'un réservoir de clarification, auquel est reliée la conduite de liaison 23 .

5. Dispositif selon l'une quelconque des revendications 3 et 4, caractérisé en ce que la conduite de liaison (23, 31, 34) se décharge en un point de mélange (41) la long du tube d'alimentation (13), et en ce qu'un détecteur de pH est placé en aval du point de mélange, lorsqu'on regarde dans la direction d'écoulement du liquide de lavage.

*Fig. 1*

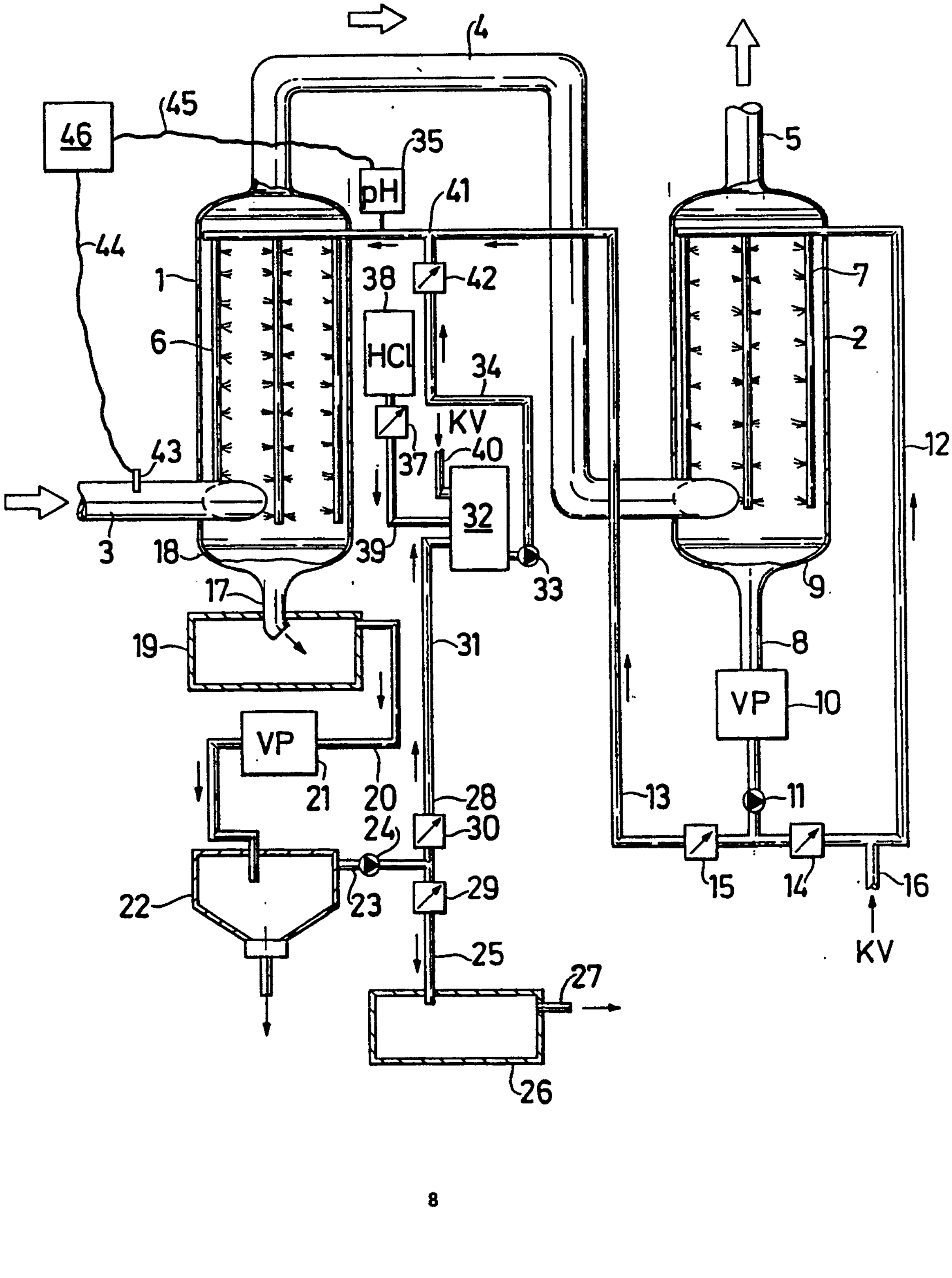
4
45
46
35
pH
41
5
44
1
38
42
7
6
HCl
34
2
KV
43
37
40
12
32
3
18
39
33
9
17
31
8
19
VP
10
VP
21
20
28
13
11
24
30
22
23
29
15
14
16
KV
25
27
26